# EUROPEAN PATENT SPECIFICATION

(11) **EP 3 484 771 B1**
(45) Date of publication and mention of the grant of the patent: **04.09.2024**
(21) Application number: 17749754.2
(22) Date of filing: 13.07.2017
(51) Int. Cl.: B64G 1/58, B64G 1/62

(54) **DECELERATOR FOR LANDING BODIES IN AEROSPACE FIELD**
LUFTBREMSE FÜR LANDENDE KÖRPER IN DER LUFT- UND RAUMFAHRT
DÉCÉLÉRATEUR POUR CORPS EN ATTERRISSAGE DANS LE DOMAINE AÉROSPATIAL

(30) Priority: 13.07.2016 IT 201600073190
(43) Date of publication of application: 22.05.2019
(73) Proprietor: Ali S.p.A., 80146 Napoli (IT)
(72) Inventor: AURIGEMMA, Renato, 80146 Napoli (IT); DELL'AVERSANA, Pasquale, 80146 Napoli (IT); GRAMICCIA, Luciano, 80146 Napoli (IT); PUNZO, Francesco, 80146 Napoli (IT); SAVINO, Raffaele, 80146 Napoli (IT); SQUAME, Giovanni, 80146 Napoli (IT); SALZA, Norberto, 80146 Napoli (IT)
(74) Representative: Studio Torta S.p.A.
(86) International application number: PCT/IB2017/054250
(87) International publication number: WO 2018/011753

(56) References cited:
- EP-A1- 1 905 691
- WO-A1-2016/132331
- US-A- 3 433 435
- US-B1- 8 733 706
- VALERIO CARANDENTE: "Aerothermodynamic and mission analyses of deployable aerobraking entry systems", PHD THESIS UNIVERSITÀ DEGLI STUDI DI NAPOLI FEDERICO II, 7 April 2014 (2014-04-07), XP055354519, Retrieved from the Internet <URL:http://www.fedoa.unina.it/9798/1/carandente_valerio_26.pdf> [retrieved on 20170314]
- MATTHIAS WIEGAND ET AL: "A Small Re-entry Capsule -BREM-SAT 2", PROCEEDINGS OF THE 10TH AIAA/USU SMALL SATELLITE CONFERENCE, LOGAN, 1 January 1996 (1996-01-01), XP055224098, Retrieved from the Internet <URL:http://digitalcommons.usu.edu/cgi/viewcontent.cgi?article=2469&context=smallsat> [retrieved on 20151028]
- MAGAZU H K ET AL: "AEROTHERMODYNAMICS OF A PARASHIELD RE-ENTRY VEHICLE", JOURNAL OF SPACECRAFT AND ROCKETS, AMERICAN INSTITUTE OF AERONAUTICS AND ASTRONAUTICS,REASTON,VA, US, vol. 35, no. 4, 1 July 1998 (1998-07-01), pages 434 - 441, XP000772988, ISSN: 0022-4650

## Description

### TECHNICAL FIELD

The invention relates to a decelerator fulfilling a thermal protection function for landing bodies.

In particular, the invention finds advantageous application in the aerospace field, as an opening servo-mechanism for aerospace platforms, to which explicit reference will be made in the description below without because of this loosing in generality.

### BACKGROUND ART

In the aerospace field there is the need to ensure the presence of a thermal protection system for vehicles, for example capsules, reentering towards the earth. As a matter of fact, during their reentry, said vehicles loose their kinetic energy, converting it to heat, which is transferred to the gases surrounding the vehicle. The fluid tends to be subjected to an aerodynamic heating by means of convection, conduction and radiation through the viscous boundary layer surrounding the vehicle, thus creating the so-called "aerodynamic heating".

Therefore, manufacturers need a deceleration system that can also ensure a thermal protection and, at the same time, can be made with low-cost materials. The PhD thesis "Aerothermodynamic and mission analyses of deployable aerobraking entry systems" of Valerio Carandente published 2014 at the Università degli Studi di Napoli Federico II discloses a deployable aerobrake for re-entry capsules using telescopic rods and cables. Document US8733706 B1 discloses a deployable aerodynamic decelerator structure includes a ring member disposed along a central axis of the aerodynamic decelerator, a plurality of jointed rib members extending radially from the ring member and a flexible layer attached to the plurality of rib members.

The Applicant designed a device that is capable of fulfilling the needs mentioned above by unfolding a braking shield. It has been proven that, by so doing, the ballistic coefficient can be reduced, thus leading to an acceptable flow of heat, an acceptable mechanical load and an acceptable descending speed.

### DISCLOSURE OF INVENTION

The subject-matter of the invention is braking and thermal protection device for landing bodies, whose essential features are set forth in claim 1, and whose preferred and/or auxiliary features are set forth in claims 2-5.

### BRIEF DESCRIPTION OF THE DRAWINGS

Below you can find a description of some embodiments, by mere way of explanatory and non-limiting examples, with reference to the accompanying drawings, wherein:
figures 1a - 1c show the device according to the invention in three different configurations;
figures 2a - 2c show the device of figures 1a - 1c in the same three configurations, but from a different perspective and with removed parts;
figure 3 is a cross section of a detail of the device of figure 1;

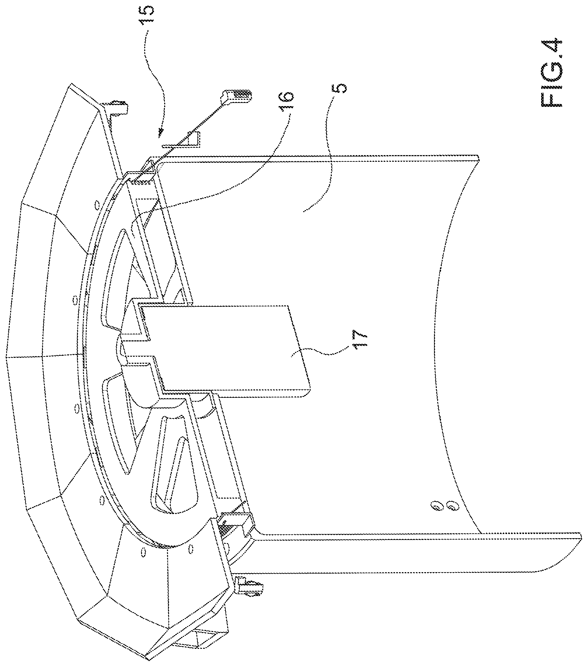

figure 4 shows, on a larger scale, a further detail of the device of figure 1;
figure 5 is a cross section of a further detail of the device of figure 1.

### BEST MODE FOR CARRYING OUT THE INVENTION

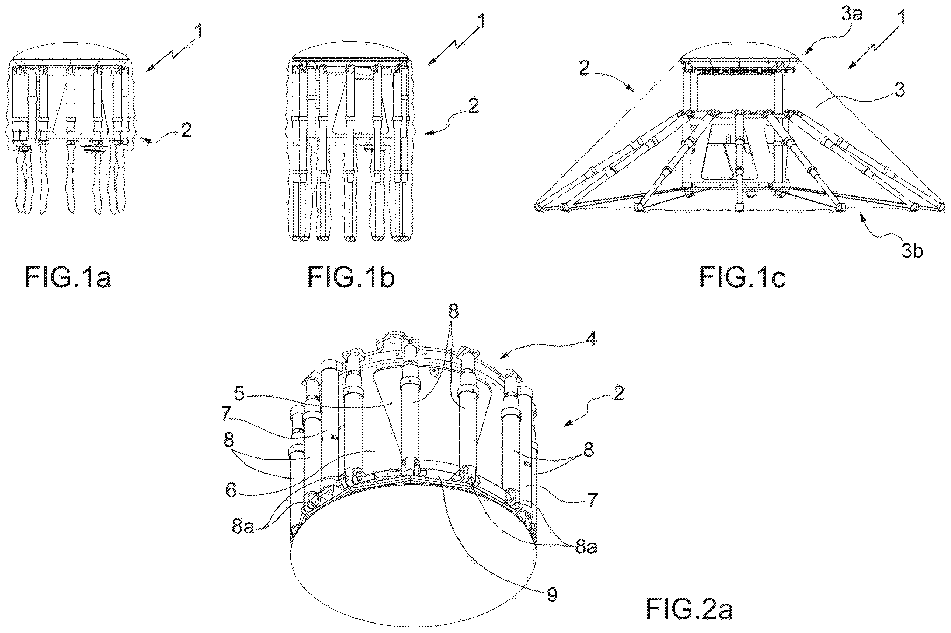

In figures 1a - 1c, number 1 indicates, as a whole, the decelerator according to the invention.

The braking and thermal protection device 1 comprises an articulated frame 2, which is movable between a closed configuration (figure 1a) and an open configuration (figure 1c), and a folding braking shield 3, which is fixed to the articulated frame 2 so as to fold when the articulated frame 2 is in its closed configuration (figure 1a) and unfold when the articulated frame 2 is in its open configuration (figure 1c).

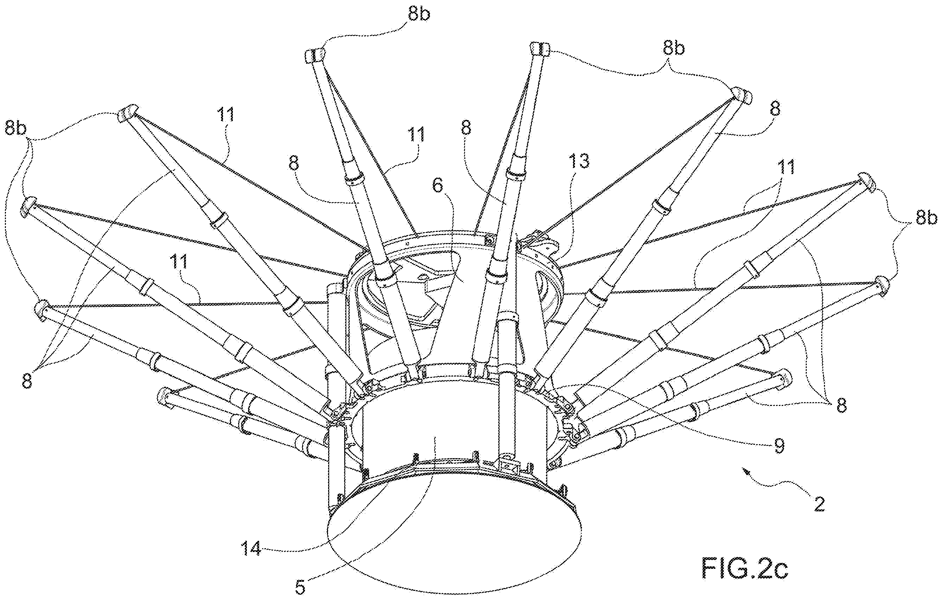

As you can see in figures 2a - 2c, the articulated frame 2 comprises a central opening actuator 4, which consists of a fixed cylindrical chamber 5 and of an outer cylindrical wall 6, which is arranged around and coaxial (axis X) to the cylindrical chamber 5. The outer cylindrical wall 6 can move, by sliding along the axis X, between a closing configuration (figure 2a) and an opening configuration (figure 2c). In the closing configuration, the outer cylindrical wall 6 is in a backward position and is arranged so as to completely surround the cylindrical chamber 5, whereas, in the opening configuration, the outer cylindrical wall 6 is in a forward position and is arranged in an offset position relative to the cylindrical chamber 5.

The sliding movement of the cylindrical wall 6 relative to the cylindrical chamber 5 takes place by means of three telescopic moving rods 7, which consist of two tubular portions, which are telescopically coupled to one another and are fixed to the cylindrical wall 6 and to the cylindrical chamber 5, respectively. In particular, each one of the three telescopic moving rods 7 comprises, on the inside, a helical spring, which is responsible for its extension. Each one of the telescopic moving rods 7 further comprises locking elements, which are designed to lock the two portions once the telescopic moving rod has reached its extension position, thus making sure that said position is maintained.

As you can clearly see in figures 2a - 2c, the articulated frame 2 comprises twelve extendable spokes 8, each having a first end 8a hinged to an upper edge 9 of the outer cylindrical portion 6 and a second end fixed to a bigger edge of the braking shield 3.

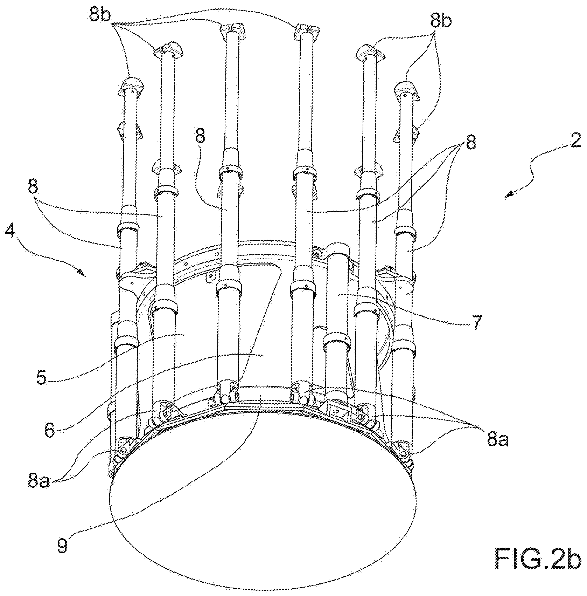

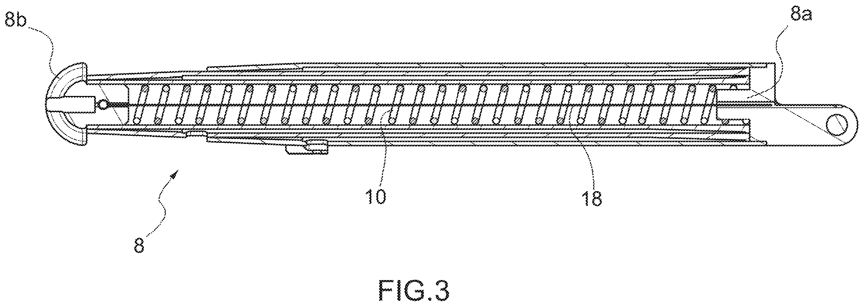

According to a preferred embodiment, each one of the extendable spokes 8 consists of three tubular portions, which are telescopically coupled to one another. As you can see in the embodiment shown in figure 3, each one of the extendable spokes 8 comprises, on the inside, a helical spring 10, which is responsible for the extension of the respective extendable spoke 8. In accordance with the claimed invention, each one of the extendable spokes 8 further comprises locking elements, which are designed to lock the three portions of the respective extendable spoke 8, when the latter is in its extended position (figures 2b, 2c, 3b, 3c). The presence of the locking elements is aimed at making sure that the extended position of the respective extendable spoke 8 is maintained.

Each one of the extendable spokes 8 is associated with a support cable 11, each having a first end externally fixed to a second end 8b of the extendable spoke 8 and a second end fixed to a lower edge 13 of the cylindrical wall 6.

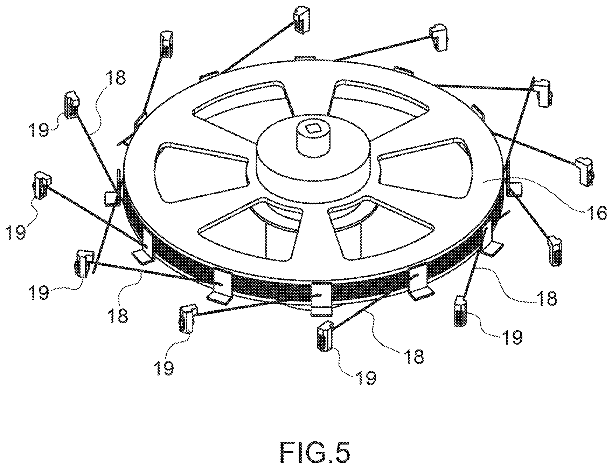

As you can see in figures 3 and 5, the articulated frame 2 comprises a damping assembly 15 consisting of a wheel 16, which is splined to a rotary damper 17, and of a plurality of retaining cables 18. Each one of the retaining cables 18 is wound around the wheel 16, so as to then engage a respective pulley 19 and internally cross a respective extendable spoke 8, where it is internally fixed to its second end 8b. In particular, as you can see in figure 5, a plurality of circumferential channels are obtained on an axial edge of the wheel 16, each housing - through winding - a respective retaining cable 18. The extension of an extendable spoke 8 takes place through the rotation of the wheel 16, which unwinds the respective retaining cable 18. The rotation of the wheel 16 occurs in a controlled manner, due to the action of the rotary damper 17, on which the wheel 16 is splined.

In other words, during the extension of each one of the extendable spokes 8, the respective retaining cable 18, due to the action of the rotary damper 17 and with the cooperation of the wheel 16, ensures a controlled extension movement of the extendable spoke 8.

As you can see in figure 5, the wheel 16 is fixed to an upper end of the cylindrical wall 6 and the rotary damper 17 is at least partially housed inside the cylindrical wall 6. The rotary damper 17 is known and, therefore, it is not described in detail.

According to a further preferred embodiment, each one of the extendable spokes 8 is of the type identified as "gas spring" and consists of two tubular portions, which are telescopically coupled to one another. This type of extendable spokes 8, as an extension braking system is already provided, does not require the presence of the damping assembly 15 described above. The gas spring extendable spokes used in this case have a locking system that, once the extendable spoke has reached its extended configuration, prevents it from retracting.

Unlike the embodiment described above, in this embodiment the outer cylindrical wall can be replaced by a sliding ring fixed to the telescopic moving rods and to the extendable spokes 8. In particular, an end of each one of the extendable spokes 8 is fixed to the sliding ring.

In use, following the sequence shown in figures 1a - 1c and 2a - 2c and starting from a closing position of the articulated frame 2 (figure 2a) and, hence, of the decelerator 1 (figure 1a), the extension of the twelve extendable spokes 8 is activated (in a known manner, which, therefore, is not relevant for the purposes of the invention). As already mentioned above, the extension of the extendable spokes 8, depending on the type of extendable spokes 8 used, can be controlled through the action of the damping assembly 15. Once the extension of the extendable spokes 8 has ended, they are completely extended and parallel to one another, as well as parallel to the cylindrical wall 6 (figures 1b and 2b). At this point, the central opening actuator 4 is operated (in a known manner, which, therefore, is not relevant for the purposes of the invention) and, hence, the sliding movement of the cylindrical wall 6 on the cylindrical chamber 5 starts. The presence of the braking shield 3 makes sure that, during the aforesaid sliding movement, the extendable spokes are forced to open (figure 2c), at the same time unfolding the braking shield (figure 1c).

As you can clearly see in figure 1c, the braking shield 3 has a smaller circular edge 3, which is fixed to the inner cylindrical portion 5 of the central part 4, and a bigger circular edge 3b, which is fixed in a discrete manner to the single ends 8b of the extendable spokes 8. Taking into account the fixing points of the braking shield 3, you can see how the latter, when it is unfolded, does not touch the extendable spokes, except for their ends, where it is fixed.

Owing to the above, the device according to the invention allows manufacturers to effectively and - especially - easily solve the problem concerning the overheating of landing bodies. The simplicity of the device according to the invention also leads to the small costs of the parts making it up. As a matter of fact, the central portion 4 can be made of aluminium, the moving rods 7 and the extendable spokes 8 can be made of a titanium alloy, and the braking shield can be made of NEXTEL^{®}. The material of the braking shield is such as to also ensure a thermal protection of the underlying components.

As a person skilled in the are can easily understand, the device according to the invention can be applied to any body that, while landing, needs to be subjected to a braking action, such as, for example, microsatellites.

## Claims

1. Decelerator (1) for landing bodies, comprising a folding braking shield (3) and an articulated frame (2), to which said folding braking shield (3) is fixed; said articulated frame (2) comprising a central opening actuator (4), which consists of an inner fixed portion (5) and an outer mobile portion (6), which can slide around said inner fixed portion (5), and a plurality of telescopically extendable spokes (8), each of them being hinged, at a first end (8a) of its, to said outer mobile portion (6) and being fixed, at a second end (8b) of its, to a bigger edge (3b) of said folding braking shield (3); said decelerator (1) being mobile between
- a closed condition, wherein: the spokes (8) are in their not extended position and are arranged so as to be parallel to one another, said outer mobile portion (6) is in a backward position, and the folding braking shield (3) is in a folded position, and
- an open condition, wherein: the spokes (8) are in their extended position and are in a radial arrangement, said outer mobile portion (6) is in a forward position, and the folding braking shield (3) is in an unfolded position;
each spoke (8) comprising a locking element which are designed to lock the spoke when is in its extended position to guarantee that its extended position is maintained in said open condition;
said articulated frame (2) comprising a plurality of support cables (11), each of them has a first end, which is fixed to said outer mobile portion (6), and a second end, which is fixed to said second end (8b) of a respective extendable spoke (8); said decelerator being **characterized by** comprising a damping assembly (15) comprising a wheel (16) coaxial to said outer portion (6), a rotary damper (17), to which the wheel (16) is splined, and a plurality of retaining cables (18), each of them being fixed to said wheel (16) so as to be reversibly wound around it and internally crossing a respective extendable spoke (8), to which it is fixed in correspondence to said second end (8b).

2. A decelerator according to claim 1, **characterized in that** each one of said extendable spokes (8) is a "gas spring" spoke.

3. A decelerator according to claim 1 or 2, **characterized in that** said wheel (16) of said damping assembly (15) is fixed to said inner fixed portion (5).

4. A decelerator according to any of the previous claims, **characterized in that** said rotary damper (17) is at least partially housed in said inner fixed portion (5).

5. A decelerator according to any of the previous claims, **characterized in that** said central opening actuator (4) comprises a plurality of telescopic moving rods (7) consisting of two tubular portions, which are telescopically coupled to one another and are fixed to the inner fixed portion (5) and to the outer mobile portion (6), respectively.

## Patentansprüche

1. Abbremsvorrichtung (1) für Landekörper, mit einem klappbaren Bremsschild (3) und einem Gelenkrahmen (2), an dem das klappbare Bremsschild (3) befestigt ist; wobei der Gelenkrahmen (2) einen zentralen Öffnungsaktuator (4) umfasst, der aus einem inneren festen Abschnitt (5) und einem äußeren beweglichen Abschnitt (6), der um den inneren festen Abschnitt (5) herum gleiten kann, und einer Vielzahl von teleskopisch ausfahrbaren Speichen (8) besteht, von denen jede an einem ersten Ende (8a) an dem äußeren beweglichen Abschnitt (6) schwenkbar angeordnet ist und an einem zweiten Ende (8b) an einer größeren Kante (3b) des faltbaren Bremsschilds (3) befestigt ist; wobei die Abbremsvorrichtung (1) beweglich ist zwischen
- einem geschlossenen Zustand, in dem: die Speichen (8) sich in ihrer nicht ausgefahrenen Position befinden und so angeordnet sind, dass sie parallel zueinander sind, der äußere bewegliche Abschnitt (6) sich in einer rückwärtigen Position befindet und das klappbare Bremsschild (3) sich in einer zusammengeklappten Position befindet, und
- einem offenen Zustand, wobei: die Speichen (8) sich in ihrer ausgefahrenen Position befinden und radial angeordnet sind, der äußere bewegliche Abschnitt (6) sich in einer vorderen Position befindet und das klappbare Bremsschild (3) sich in einer ausgeklappten Position befindet;
wobei jede Speiche (8) ein Verriegelungselement umfasst, das so gestaltet ist, dass es die Speiche verriegelt, wenn sie sich in ihrer ausgefahrenen Position befindet, um zu gewährleisten, dass ihre ausgefahrene Position in dem offenen Zustand beibehalten wird;
wobei der Gelenkrahmen (2) eine Vielzahl von Tragseilen (11) aufweist, von denen jedes ein erstes Ende hat, das an dem äußeren beweglichen Abschnitt (6) befestigt ist, und ein zweites Ende, das an dem zweiten Ende (8b) einer jeweiligen ausfahrbaren Speiche (8) befestigt ist; wobei die Verzögerungsvorrichtung **dadurch gekennzeichnet ist, dass** sie eine Dämpfungsanordnung (15) umfasst, die ein Rad (16), das koaxial zu dem äußeren Abschnitt (6) ist, einen Drehdämpfer (17), mit dem das Rad (16) verzahnt ist, und eine Vielzahl von Halteseilen (18) umfasst, von denen jedes an dem Rad (16) so befestigt ist, dass es reversibel um dieses gewickelt ist und intern eine jeweilige ausfahrbare Speiche (8) kreuzt, an der es korrespondierend zu dem zweiten Ende (8b) befestigt ist.

2. Abbremsvorrichtung nach Anspruch 1, **dadurch gekennzeichnet, dass** jede der ausziehbaren Speichen (8) eine "Gasfeder"-Speiche ist.

3. Abbremsvorrichtung nach Anspruch 1 oder 2, **dadurch gekennzeichnet, dass** das Rad (16) der Dämpfungsanordnung (15) an dem inneren festen Abschnitt (5) befestigt ist.

4. Abbremsvorrichtung nach einem der vorhergehenden Ansprüche, **dadurch gekennzeichnet, dass** der Drehdämpfer (17) zumindest teilweise in dem inneren festen Abschnitt (5) untergebracht ist.

5. Abbremsvorrichtung nach einem der vorhergehenden Ansprüche, **dadurch gekennzeichnet, dass** der zentrale Öffnungsaktuator (4) eine Vielzahl von teleskopisch beweglichen Stangen (7) umfasst, die aus zwei röhrenförmigen Abschnitten bestehen, die teleskopisch miteinander gekoppelt und an dem inneren festen Abschnitt (5) bzw. an dem äußeren beweglichen Abschnitt (6) befestigt sind.

## Revendications

1. Décélérateur (1) pour corps en atterrissage, comprenant un bouclier de freinage repliable (3) et un châssis articulé (2), auquel ledit bouclier de freinage repliable (3) est fixé; ledit châssis articulé (2) comprenant un actionneur d'ouverture central (4), qui consiste en une partie fixe interne (5) et une partie mobile externe (6), qui peut coulisser autour de ladite partie fixe interne (5), et une pluralité de rayons (8) télescopiquement extensibles, chacun d'eux étant articulé, à une première extrémité (8a) de celui-ci, à ladite partie mobile externe (6) et étant fixé, à une deuxième extrémité (8b) de celui-ci, à un bord plus grand (3b) dudit bouclier de freinage repliable (3); ledit décélérateur (1) étant mobile entre
- un état fermé, dans lequel: les rayons (8) sont dans leur position non d'extension et sont disposés de manière à être parallèles les uns aux autres, ladite partie mobile externe (6) est dans une position arrière, et le bouclier de freinage repliable (3) est dans une position pliée, et
- un état ouvert, dans lequel: les rayons (8) sont dans leur position d'extension et sont dans une disposition radiale, ladite partie mobile externe (6) est dans une position avant, et le bouclier de freinage repliable (3) est dans une position dépliée;
chaque rayon (8) comprenant un élément de verrouillage qui sont conçus pour verrouiller le rayon lorsqu'il est dans sa position d'extension pour garantir que sa position d'extension est maintenue dans ledit état ouvert;
ledit châssis articulé (2) comprenant une pluralité de câbles de support (11), chacun d'eux a une première extrémité, qui est fixée à ladite partie mobile externe (6), et une deuxième extrémité, qui est fixée à ladite deuxième extrémité (8b) d'un rayon extensible respectif (8); ledit décélérateur étant **caractérisé en ce qu'**il comprend un ensemble d'amortissement (15) comprenant une roue (16) coaxiale à ladite partie externe (6), un amortisseur rotatif (17), auquel la roue (16) est cannelée, et une pluralité de câbles de retenue (18), chacun d'eux étant fixé à ladite roue (16) de manière à être enroulé de manière réversible autour d'elle et traversant de manière interne un rayon extensible (8) respectif, auquel il est fixé en correspondance avec ladite deuxième extrémité (8b).

2. Décélérateur selon la revendication 1, **caractérisé en ce que** chacun desdits rayons extensibles (8) est un rayon à "ressort à gaz".

3. Décélérateur selon la revendication 1 ou 2, **caractérisé en ce que** ladite roue (16) dudit ensemble d'amortissement (15) est fixée à ladite partie fixe interne (5).

4. Décélérateur selon l'une quelconque des revendications précédentes, **caractérisé en ce que** ledit amortisseur rotatif (17) est au moins partiellement logé dans ladite partie fixe interne (5).

5. Décélérateur selon l'une quelconque des revendications précédentes, **caractérisé en ce que** ledit actionneur d'ouverture central (4) comprend une pluralité de tiges mobiles télescopiques (7) consistant en deux parties tubulaires, qui sont couplées télescopiquement l'une à l'autre et sont fixées à la partie fixe interne (5) et à la partie mobile externe (6), respectivement.
